# EUROPEAN PATENT SPECIFICATION

(11) **EP 3 354 160 B1**
(45) Date of publication and mention of the grant of the patent: **16.10.2019**
(21) Application number: 17154091.7
(22) Date of filing: 31.01.2017
(51) Int. Cl.: B66F 7/06, A47B 9/16, A47B 3/02, B60B 33/00

(54) **HEIGHT-ADJUSTABLE PLATFORM**
HÖHENVERSTELLBARE PLATTFORM
PLATE-FORME RÉGLABLE EN HAUTEUR

(43) Date of publication of application: 01.08.2018
(73) Proprietor: Jørgen Kruuse A/S, 5550 Langeskov (DK)
(72) Inventor: Nagel, Andrew, 6000 Kolding (DK); Faulend, Stefan, 7423 Pinkafeld (AT); Pedersen, Henrik H., 5550 Langeskov (DK); Lassen, Martin, 5550 Langeskov (DK)
(74) Representative: Plougmann Vingtoft a/s

(56) References cited:
- DE-U1- 29 802 044
- GB-A- 2 363 366

## Description

### Field of the invention

The present invention relates to top frames or tables having an adjustable height.

### Background of the invention

Usually, tables have a fixed height, or at least adjustment of the height from the floor to the tabletop is difficult to adjust. To get something from the floor onto the tabletop requires separate means, which tends to result in humans performing the platforming. So-called ergonomic desks, typically motor-driven, tend to be heavy, and their mechanics are typically rather complex.

GB 2 363 366 A (BLACKFORD JOHN LESLIE [GB]) 19 December 2001 (2001-12-19) discloses a trolley that comprises a platform, the height of which is adjustable and that can be converted into a work table when the user operates levers which releases friction clamps from engagement with rods connected to each leg. This allows the platform to be lifted and locked at the required height. Lifting of the platform also raises trolley wheels so that they are no longer in contact with the ground.

### Brief description of the drawings

Figure 1 illustrates a side view of a height-adjustable platform in accordance with an embodiment of the invention.
Figure 2 illustrates an opposite side view of the height-adjustable platform in Figure 1.
Figure 3 illustrates an end view of the height-adjustable platform in Figure 1.
Figure 4 illustrates an opposite end view of the height-adjustable platform in Figure 3.
Figure 5 illustrates the height-adjustable platform in a lowered position.
Figure 6 illustrates a bottom view of the height-adjustable platform in Figure 1.
Figure 7 illustrates a top view of the height-adjustable platform in Figure 1.

### Summary of the invention

The present invention provides a height-adjustable, rollable platform that can mitigate at least some of the concerns described above. The height-adjustable platform comprises:
- a top frame comprising a track system,
- first and second movable members arranged to be guided in the track system, each movable member comprising a respective leg mount,
- a first pair of parallel platform legs, each leg having a first and a second end, the first ends of the first pair of legs being attached to the leg mount of the first movable member, the second ends of the first pair of legs being attached to respective casters via respective caster mounts, and each of the first pair of legs comprises a pair of mutually parallel rods rotatably fixed at one end to the leg mount of the first movable member and rotatably fixed at the other end to the respective caster mount, the pair of rods together with the leg mount of the first movable member and the respective caster mount forming a parallelogram configuration,
- a second pair of parallel platform legs, each leg having a first and a second end, the first ends of the second pair of legs being attached to the leg mount of the second movable member, the second ends of the second pair of legs being attached to respective casters via respective caster mounts, and each of the second pair of legs comprises a pair of mutually parallel rods rotatably fixed at one end to the leg mount of the second movable member and rotatably fixed at the other end to the respective caster mount, the pair of rods together with the leg mount of the second movable member and the respective caster mount forming a parallelogram configuration,
the first pair and the second pair of parallel platform legs being arranged to cross one another,
a first rod of the first pair of platform legs being rotatably connected to a first rod of the second pair of platform legs at a first connection point,
a second rod of the first pair of platform legs being rotatably connected to a second rod of the second pair of platform legs at a second connection point,
whereby the first pair of legs and the second pair of legs can be rotated with respect to one another around the first and second connection points, which in combination with the parallelogram configurations allow a height of the top frame with respect to the casters to be changed.

The legs can be made from many different materials, for instance metals, such as aluminium or stainless steel, or composites or other types of materials. This is a matter of design. The same applies to the other parts of the platform, which are selected to suit the purpose as best as possible. For instance, the tabletop could be made of a plastic, which is cheap compared to a metal tabletop. However, a metal tabletop might be required, for instance due to hygiene restrictions. A tabletop made of wood could provide a more aesthetic look.

In some embodiments, the track system comprises a set of parallel tracks, and each of the first and second movable members comprises, respectively, a pair of movable elements, each being arranged in a corresponding one of the parallel tracks. In some embodiments, a length of the first pair of legs is equal to a length of the second pair of legs.

In some embodiments, the height-adjustable platform comprises a stabilizer having a first end rotatably fixed to the top frame and having a second end rotatably fixed to one of the rods of the first pair of legs or second pair of legs. In some embodiments, the first end of the stabilizer is attached with an equal distance from the first leg mount and the second leg mount. In such embodiments, the platform does not travel relative to the connection points, whereas if the stabilizer in not arranged in this way, the platform will move relative to the connection points.

In some embodiments, the height-adjustable platform comprises holding means for holding the first and second pair of legs fixed with respect to each other in two or more height configurations. This may for instance be provided as at latch system where the movable members can latch in the track. Alternatively, holes in the track can allow a pin to be inserted to prevent the movable members from travelling.

In some embodiments, the height-adjustable platform comprises an actuator configured to effect a rotation of the first pair of legs with respect to the second pair of legs around the connection points, whereby a height of the platform is adjusted by adjusting a length of the actuator. The actuator is preferably a motorized, but a manual extender may also be used as actuator. In some embodiments, the actuator is a hydraulic cylinder. In some embodiments, the actuator is a pneumatic cylinder.

In some embodiments, the track system comprises C-profiles, and the movable members are sliders arranged in the C-profiles.

In some embodiments, the track system, or a part of the track system, is a rail track and the movable members for the rail track is a corresponding roller.

In some embodiments, each of the first and second pair of legs are maintained parallel to one another by crossbars rigidly connecting casters of respective pairs of legs to one another.

In some embodiments, the top frame of the height-adjustable platform is covered by a tabletop.

In some embodiments, the top frame of the height-adjustable platform comprises at least one of: a side rail; a peg; a hook; a basket. This allows for attaching or carrying things on the side of the table.

### Detailed description of selected embodiments

In the following, the invention will be described with reference to the exemplary attached drawings.

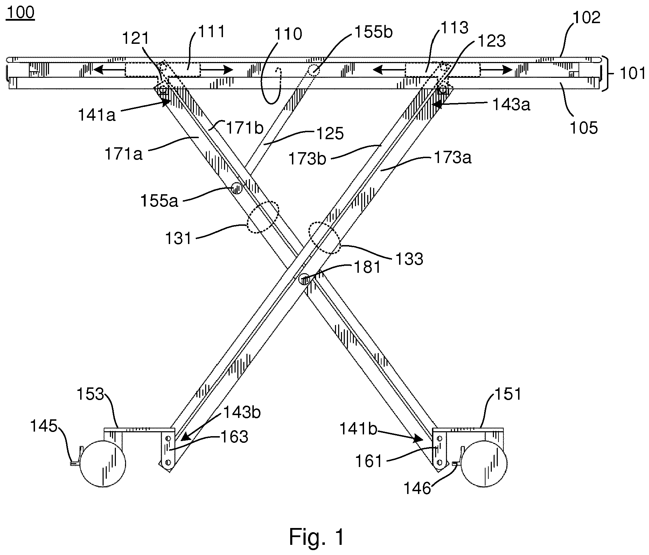

Fig. 1 illustrates a side view of a height-adjustable platform 100 in accordance with an embodiment of the invention. In this embodiment, the platform 100 is a table having a tabletop 102 as part of its top frame 101. It further comprises a first leg 131, a second leg 133, and casters 151, 153 for allowing easy rolling of the table. The casters are attached to the legs 131, 133 via respective caster mounts 161, 163. The caster mounts allow the wheels to rotate, a well-known function of a caster. These casters in the figure also have breaks 145, 146 for breaking the wheels to prevent the table from rolling.

The first leg 131 is made up of a pair of rods 171a and 171b that are parallel, or at least substantially parallel. Rods 171a and 171b are attached at a first end 141a of the rods to a leg mount 121 of a movable element 111. The movable element is not visible in the view, but illustrated with dashed lines, and arrows indicate its direction of travel. The movable element 111 travels in a track system 110 (also not directly visible), which both allows the movable element to move, but yet restricts the movable element 110 to a certain motion, typically a linear motion.

At their other ends 141b, the rods 171a and 171b are attached to caster 151 via a caster mount 161.

Similarly, the second leg 133 is made up of a pair of rods 173a and 173b that are parallel, or at least substantially parallel. Rods 173a and 173b are attached a first end 143a of the rods to a leg mount 123 of a movable element 113. Similar to movable element 111, the movable element 113 travels in track system 110. The movable element is not visible in the view, but is illustrated with dashed lines, and arrows indicate their direction of travel. At their other ends 143b, the rods 173a and 173b are attached to caster 153 via a caster mount 163.

A rod 171a of leg 131 is rotatably connected at connection point 181 to a corresponding rod 173a of leg 133, via for instance by a rivet or similar attachment means. This allows the legs 131 and 133 to rotate with respect to each other around the connection point.

The table is in a raised position, but can be raised further, as in this example the movable elements can travel further inward in the track system 110.

The table also comprises rails 105, 106 to which different equipment, for instance belts or straps, can be tied or otherwise attached.

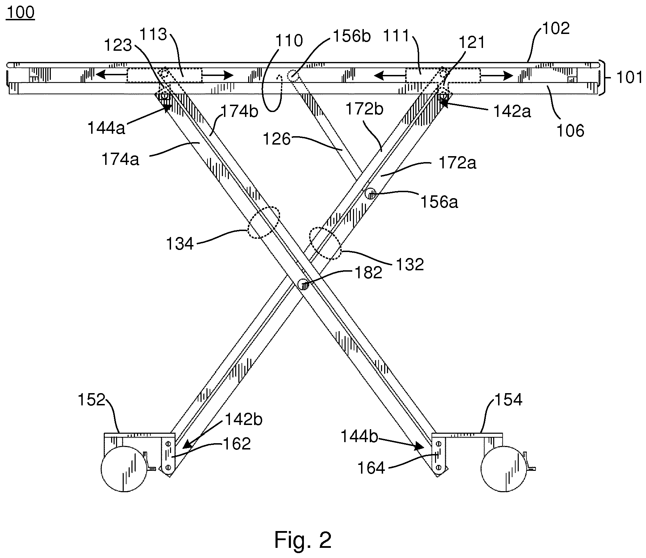

Fig. 2 is similar to Fig. 1, but illustrates the table from the opposite side. The figure shows leg 132, which forms a pair of parallel legs together with leg 131 in Fig. 1. Similarly, leg 134 forms a pair of parallel legs together with leg 133 in Fig. 1. Similarly, to leg 131 in Fig. 1, the leg 132 in Fig. 2 is made up of a pair of rods 172a and 172b that are parallel, or at least substantially parallel. Rods 172a and 172b are attached to the leg mount 121 at a first end 142a of the rods, which corresponds to end 141a of rods 171a and 171b in Fig. 1. At the other ends 142b, which corresponds to end 141b in Fig. 1, the rods 172a and 172b are attached to caster 152 via a caster mount 162. Similarly, the second leg 134 in Fig. 2 is made up of a pair of rods 174a and 174b that are parallel, or at least substantially parallel. Rods 174a and 174b are attached to the leg mount 123 at a first end 144a (corresponding to end 143a in Fig. 1) of the rods 174a, 174b. At their other ends 144b (corresponding to end 143b in Fig. 1), the rods 174a and 174b are attached to caster 154 via a caster mount 164. Just as shown in Fig. 1, rod 172a of leg 132 is rotatably connected to a corresponding rod 174a of leg 134 via for instance a rivet, in connection point 182.

The leg mount 121 together with rods 171a and 171b and caster mount 151 form a parallelogram. The leg mount 123 together with rods 173a and 173b and caster mount 153 also form a parallelogram. Similarly, the leg mount 121 together with rods 172a and 172b and caster mount 152 form a parallelogram, and the leg mount 123 together with rods 174a and 174b and caster mount 154 also form a parallelogram.

An important advantage of the present invention is that when the table height is adjusted by adjusting the position of the leg mounts 121 and 123 within the track system 110, the caster mounts will retain their orientation. Without the parallelogram feature, the caster mounts might come into contact with the surface on which the table stood, whereby the wheels would no longer support easy movement of the table - and the surface on which the table stood would possibly become scratched by the caster mounts.

A stabilizer element 125, shown in Fig. 1, is preferably rotatably attached to for instance rod 171a at a first end 155a of the stabilizer 125, for instance with a rivet or similar means, and also rotatably attached to the top frame 102 at a second end 155b of the stabilizer, for instance with a rivet or similar means. Without such a stabilizer, the tabletop is free to move. In some instances, this can be an advantage since it gives flexibility, but it does allow the center of gravity to shift, in some cases maybe unexpectedly, and therefore the stabilizer provides, for many purposes, a more predictable table.

A second stabilizer element 126, shown in Fig. 2, may be similarly attached on the opposite side to mirror the stabilizer 125, and attached in a similar fashion, with a first end 156a rotatably attached to for instance rod 172a with a rivet or similar means, and also rotatably attached at a second end 156b to the top frame 102, for instance with a rivet or similar means.

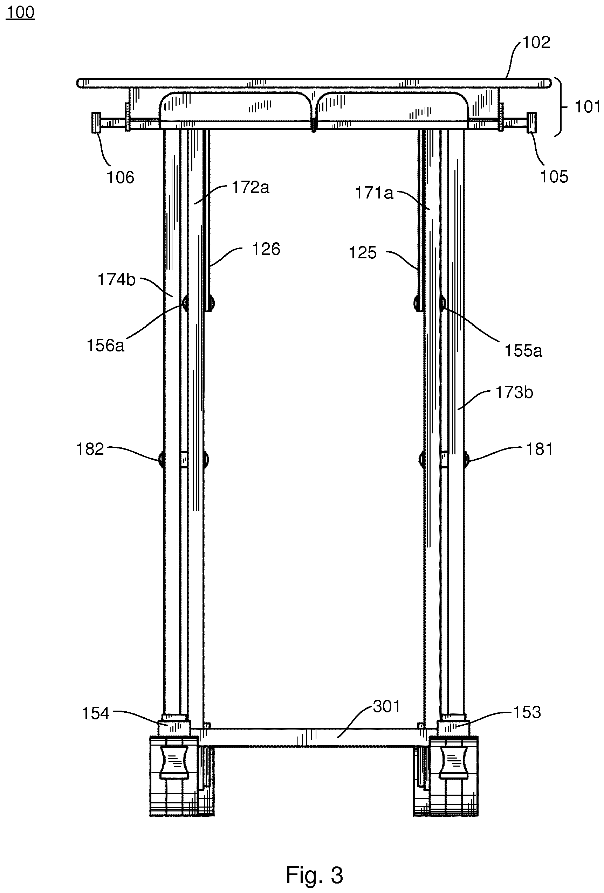

Fig. 3 illustrates and end view of the table 100. This provides a different view of rod 171b of leg 131, rod 173a of leg 133, rod 172b of leg 132, and rod 174a of leg 134; casters 151, 152, and connection points 181 and 182 that connect the rods rotatably. Rivets, marked as 155a and 156a, attach stabilizers 125 and 126 to the legs as described above.

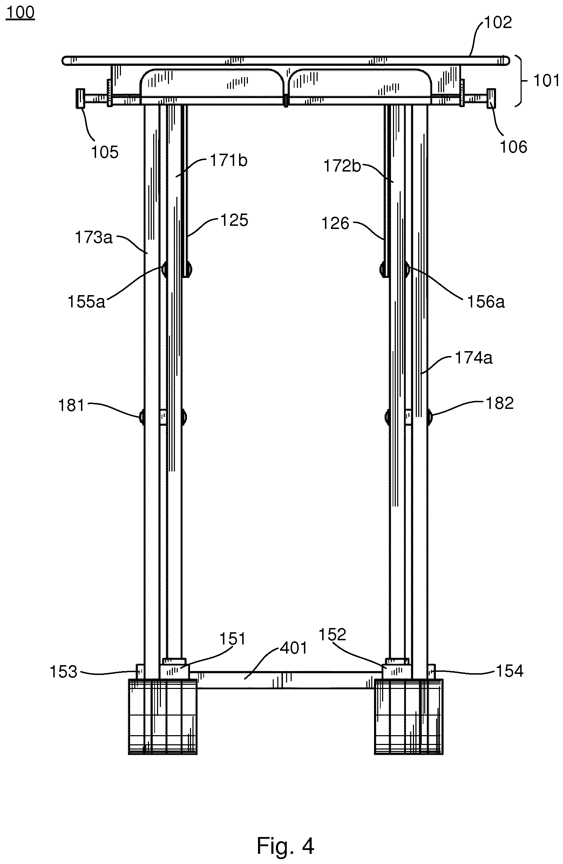

Fig. 4 illustrates the table from the opposite end compared to Fig. 3.

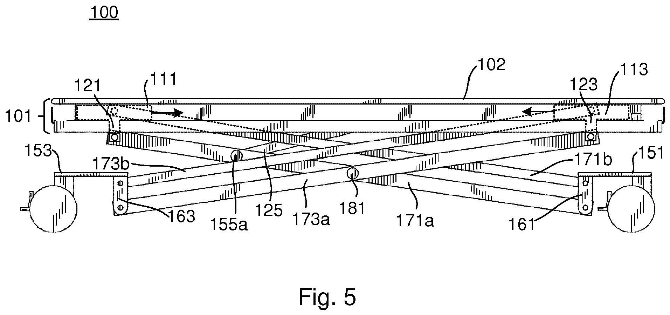

Fig. 5 illustrates a side view of the table in the lowest available position. The sliders are now at the end of the track's extent.

As described above, the table can assume this height and any other height within its range, without the casters changing position relative to the floor, as can be seen by comparing the casters in Fig. 1 (raised) and Fig. 5 (lowered to lowest position). Accordingly, the table can easily be rolled and is stable at all available heights.

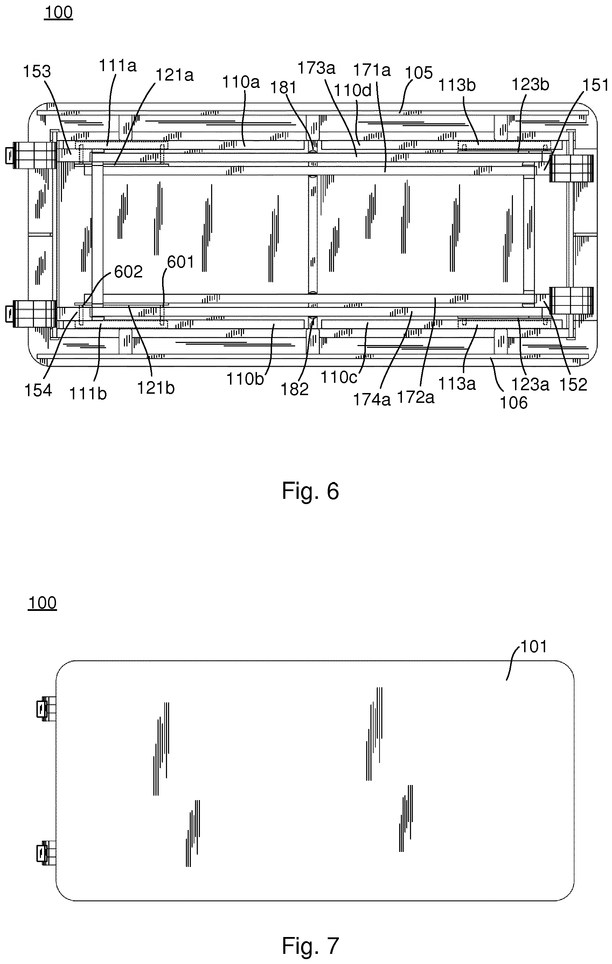

Fig. 6 shows an underside of the table 100. In particular, it shows the table's movable members 111 and 113 as being comprised of, respectively, movable elements 111a and 111b and movable elements 113a and 113b. Movable elements 111a and 111b are guided by respective C-profiles 110a and 110b. Movable elements 111a, 111b, 113a, and 113b are shown with dashed lines because they are not visible, being located inside the C-profile. Each movable element 111a and 111b is connected to its corresponding leg mount 121a and 121b to which respective first legs 131 and 132 (represented by rods 171a and 172a) are attached. Similarly, movable elements 113a and 113b are placed in respective C-profiles 110c and 110d. Each movable element 113a and 113b is connected to its corresponding leg mount 123a and 123b to which respective second legs 133 and 134 (represented by rods 173a and 174a) are attached. In this example, the leg mounts are attached to the movable elements with screws, as exemplified by screws 601 and 602 connecting leg mount 121b to movable element 111b.

Fig. 6 illustrates four separate tracks, 110a-110d. Tracks 110a and 110d could also be formed as a single continuous track, for instance as a single C-profile. The same applies with respect to tracks 110b and 110c. The result would be that the track system had two tracks. This is merely a matter of design.

Fig. 7 illustrates a top view of the table in the lowest position (shown in Fig. 5). Wheels on casters 153 and 154 are visible under the table, but the wheels can rotate and could therefore be oriented inwards under the tabletop and not be visible.

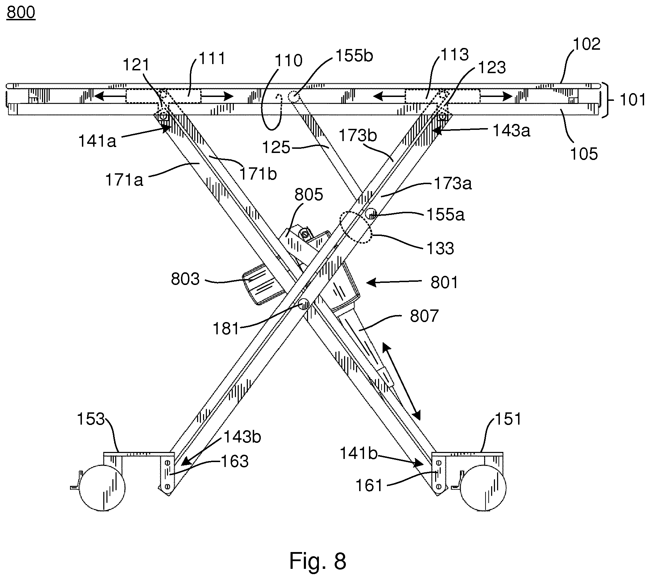

Fig. 8 illustrates a table similar to the table in the previous figures, but the table 800 in Fig. 8 further comprises an actuator 801 having a motor 803 for driving a length of the actuator to increase or decrease its length, as illustrated by the arrow. At one end, the actuator 801 is attached to a bracket 805, which is rigidly attached to rod 173a. At the other end, the actuator is rigidly attached to the crossbar 401 between casters 151 and 152 (see Fig. 4). When the actuator's length is increased, legs 133 and 134 (the latter is not visible in this view) rotate counterclockwise in the view with respect to legs 131 and 132 (the latter is not visible in this view). The movable elements 111 and 113 travel toward the middle of the table, which translates into the tabletop 102 being raised.

## Claims

1. A height-adjustable platform (100) comprising:
- a top frame (101) comprising a track system (110),
- first and second movable members (111, 113) arranged to be guided in the track system (110), each movable member (111, 113) comprising a respective leg mount (121, 123),
- a first pair of parallel platform legs (131, 132), each leg having a first and a second end (141a, 141b, 142a, 142b), the first ends (141a, 142a) of the first pair of legs (131, 132) being attached to the leg mount (121) of the first movable member (111), the second ends (141b, 142b) of the first pair of legs (131, 132) being attached to respective casters (151, 152) via respective caster mounts (161, 162), and each of the first pair of legs comprises a pair of mutually parallel rods (171a, 171b, 172a, 172b) rotatably fixed at one end to the leg mount (121) of the first movable member (111) and rotatably fixed at the other end to the respective caster mount (161, 162), the pair of rods (171a, 171b, 172a, 172b) together with the leg mount (121) of the first movable member (111) and the respective caster mount (161, 162) forming a parallelogram configuration,
- a second pair of parallel platform legs (133, 134), each leg having a first and a second end (143a, 143b, 144a, 144b), the first ends (143a, 144a) of the second pair of legs (143, 144) being attached to the leg mount (123) of the second movable member (113), the second ends (143b, 144b) of the second pair of legs (143, 144) being attached to respective casters (153, 154) via respective caster mounts (163, 164), and each of the second pair of legs (143, 144) comprises a pair of mutually parallel rods (173a, 173b, 174a, 174b) rotatably fixed at one end to the leg mount (123) of the second movable member (113) and rotatably fixed at the other end to the respective caster mount (163, 164), the pair of rods together with the leg mount (123) of the second movable member (113) and the respective caster mount (163, 164) forming a parallelogram configuration,
the first pair (131, 132) and the second pair (133, 134) of parallel platform legs being arranged to cross one another,
a first rod (171a) of the first pair of platform legs (131, 132) being rotatably connected to a first rod (173a) of the second pair of platform legs at a first connection point (181),
a second rod (172a) of the first pair of platform legs (131, 132) being rotatably connected to a second rod (174a) of the second pair of platform legs at a second connection point (182),
whereby the first pair of legs (131, 132) and the second pair of legs (133, 134) can be rotated with respect to one another around the first and second connection points, which in combination with the parallelogram configurations allow a height of the top frame (101) with respect to the casters (151, 152, 153, 154) to be changed.

2. A height-adjustable platform in accordance with claim 1, wherein the track system comprises a set of parallel tracks (110a, 110b, 110c, 110d), and each of the first and second movable members (111, 113) comprises, respectively, a pair of movable elements (111a, 111b, 113a, 113b), each being arranged in a corresponding one of the parallel tracks (110a, 110b, 110c, 110d).

3. A height-adjustable platform in accordance with claim 1 or 2, wherein a length of the first pair of legs (131, 132) is equal to a length of the second pair of legs (133, 134).

4. A height-adjustable platform in accordance with one of claims 1-3, further comprising a stabilizer (125) having a first end (155b) rotatably fixed to the top frame (101) and having a second end (155a) rotatably fixed to one of the rods (171a, 171b, 172a, 172b, 173a, 173b, 174a, 174b) of the first pair of legs (131, 132) or second pair of legs (133, 134).

5. A height-adjustable platform in accordance with claim 4, wherein the first end (155b) of the stabilizer is attached with an equal distance from the first leg mount (121) and the second leg mount (123).

6. A height-adjustable platform in accordance with any of the preceding claims, further comprising holding means for holding the first and second pair of legs fixed with respect to each other in two or more height configurations.

7. A height-adjustable platform in accordance with any of the preceding claims, further comprising an actuator configured to effect a rotation of the first pair of legs (131, 132) with respect to the second pair of legs (133, 134) around the connection points (181, 182), whereby a height of the platform is adjusted by adjusting a length of the actuator.

8. A height-adjustable platform in accordance with claim 7, wherein the actuator is a linear actuator.

9. A height-adjustable platform in accordance with claim 7, wherein the actuator is a hydraulic cylinder.

10. A height-adjustable platform in accordance with claim 7, wherein the actuator is a pneumatic cylinder.

11. A height-adjustable platform in accordance with any of the preceding claims, wherein the track system comprises C-profiles, and the movable members (111, 113) are sliders arranged in the C-profiles.

12. A height-adjustable platform in accordance with any of the preceding claims, wherein the track system is a rail track and the movable members are corresponding rollers.

13. A height-adjustable platform in accordance with any of the preceding wherein each of the first and second pair of legs are maintained parallel to one another by crossbars (301, 401) rigidly connecting casters (151, 152, 153, 154) of respective pairs of legs (131, 132, 133, 134) to one another.

14. A height-adjustable platform in accordance with any of the preceding claims, wherein the top frame is covered by a tabletop.

15. A height-adjustable platform in accordance with any of the preceding claims, wherein the top frame comprises at least one of: a side rail; a peg; a basket.

## Patentansprüche

1. Höheneinstellbare Plattform (100), umfassend:
- einen oberen Rahmen (101), umfassend ein Schienensystem (110),
- ein erstes und ein zweites bewegliches Element (111, 113), die dazu angeordnet sind, in dem Schienensystem (110) geführt zu werden, wobei jedes bewegliche Element (111, 113) eine jeweilige Beinbefestigung (121, 123) umfasst,
- ein erstes Paar von parallelen Plattformbeinen (131, 132), wobei jedes Bein ein erstes und ein zweites Ende (141a, 141b, 142a, 142b) aufweist, wobei die ersten Enden (141a, 142a) des ersten Paares von Beinen (131, 132) an der Beinbefestigung (121) des ersten beweglichen Elements (111) befestigt sind, die zweiten Enden (141b, 142b) des ersten Paares von Beinen (131, 132) an jeweiligen Laufrollen (151, 152) über jeweilige Laufrollenbefestigungen (161, 162) befestigt sind und jedes von dem ersten Paar von Beinen ein Paar von zueinander parallelen Stangen (171a, 171b, 172a, 172b) umfasst, die an einem Ende der Beinbefestigung (121) des ersten beweglichen Elements (111) drehbar fixiert sind und an dem anderen Ende an der jeweiligen Laufrollenbefestigung (161, 162) drehbar fixiert sind, wobei das Paar von Stangen (171a, 171b, 172a, 172b) zusammen mit der Beinbefestigung (121) des ersten beweglichen Elements (111) und der jeweiligen Laufrollenbefestigung (161, 162) eine Parallelogrammkonfiguration bildet,
- ein zweites Paar von parallelen Plattformbeinen (133, 134), wobei jedes Bein ein erstes und ein zweites Ende (143a, 143b, 144a, 144b) aufweist, wobei die ersten Enden (143a, 144a) des zweiten Paares von Beinen (143, 144) an der Beinbefestigung (123) des zweiten beweglichen Elements (113) befestigt sind, die zweiten Enden (143b, 144b) des zweiten Paares von Beinen (143, 144) an jeweiligen Laufrollen (153, 154) über jeweilige Laufrollenbefestigungen (163, 164) befestigt sind und jedes von dem zweiten Paar von Beinen (143, 144) ein Paar von zueinander parallelen Stangen (173a, 173b, 174a, 174b) umfasst, die an einem Ende der Beinbefestigung (123) des zweiten beweglichen Elements (113) drehbar fixiert sind und an dem anderen Ende an der jeweiligen Laufrollenbefestigung (163, 164) drehbar fixiert sind, wobei das Paar von Stangen zusammen mit der Beinbefestigung (123) des zweiten beweglichen Elements (113) und der jeweiligen Laufrollenbefestigung (163, 164) eine Parallelogrammkonfiguration bildet,
wobei das erste Paar (131, 132) und das zweite Paar (133, 134) von parallelen Plattformbeinen so angeordnet sind, dass sie sich gegenseitig kreuzen,
wobei eine erste Stange (171a) des ersten Paares von Plattformbeinen (131, 132) mit einer ersten Stange (173a) des zweiten Paares von Plattformbeinen an einem ersten Verbindungspunkt (181) drehbar verbunden ist,
wobei eine zweite Stange (172a) des ersten Paares von Plattformbeinen (131, 132) mit einer zweiten Stange (174a) des zweiten Paares von Plattformbeinen an einem zweiten Verbindungspunkt (182) drehbar verbunden ist,
wodurch das erste Paar von Beinen (131, 132) und das zweite Paar von Beinen (133, 134) in Bezug zueinander um den ersten und den zweiten Verbindungspunkt gedreht werden können, was es in Kombination mit den Parallelogrammkonfigurationen ermöglicht, eine Höhe des oberen Rahmens (101) in Bezug auf die Laufrollen (151, 152, 153, 154) zu ändern.

2. Höheneinstellbare Plattform nach Anspruch 1, wobei das Schienensystem eine Reihe von parallelen Schienen (110a, 110b, 110c, 110d) umfasst und jedes von dem ersten und dem zweiten beweglichen Element (111, 113) jeweils ein Paar von beweglichen Elementen (111a, 111b, 113a, 113b) umfasst, von denen jedes in einer entsprechenden einen der parallelen Schienen (110a, 110b, 110c, 110d) angeordnet ist.

3. Höheneinstellbare Plattform nach Anspruch 1 oder 2, wobei eine Länge des ersten Paares von Beinen (131, 132) gleich einer Länge des zweiten Paares von Beinen (133, 134) ist.

4. Höheneinstellbare Plattform nach einem der Ansprüche 1-3, ferner umfassend einen Stabilisator (125) mit einem ersten Ende (155b), das an dem oberen Rahmen (101) drehbar fixiert ist, und mit einem zweiten Ende (155a), das an einer der Stangen (171a, 171b, 172a, 172b, 173a, 173b, 174a, 174b) des ersten Paares von Beinen (131, 132) oder des zweiten Paares von Beinen (133, 134) drehbar fixiert ist.

5. Höheneinstellbare Plattform nach Anspruch 4, wobei das erste Ende (155b) des Stabilisators in einem gleichen Abstand von der ersten Beinbefestigung (121) und der zweiten Beinbefestigung (123) befestigt ist.

6. Höheneinstellbare Plattform nach einem der vorhergehenden Ansprüche, ferner umfassend Haltemittel zum Halten des ersten und des zweiten Paares von Beinen, die in Bezug zueinander fixiert sind, in zwei oder mehr Höhenkonfigurationen.

7. Höheneinstellbare Plattform nach einem der vorhergehenden Ansprüche, ferner umfassend eine Betätigungsvorrichtung, die dazu konfiguriert ist, eine Drehung des ersten Paares von Beinen (131, 132) in Bezug auf das zweite Paar von Beinen (133, 134) um die Verbindungspunkte (181, 182) zu bewirken, wodurch eine Höhe der Plattform durch Einstellen einer Länge der Betätigungsvorrichtung eingestellt wird.

8. Höheneinstellbare Plattform nach Anspruch 7, wobei die Betätigungsvorrichtung eine lineare Betätigungsvorrichtung ist.

9. Höheneinstellbare Plattform nach Anspruch 7, wobei die Betätigungsvorrichtung ein hydraulischer Zylinder ist.

10. Höheneinstellbare Plattform nach Anspruch 7, wobei die Betätigungsvorrichtung ein pneumatischer Zylinder ist.

11. Höheneinstellbare Plattform nach einem der vorhergehenden Ansprüche, wobei das Schienensystem C-Profile umfasst und die beweglichen Elemente (111, 113) in den C-Profilen angeordnete Schlitten sind.

12. Höheneinstellbare Plattform nach einem der vorhergehenden Ansprüche, wobei das Schienensystem eine Laufschiene ist und die beweglichen Elemente entsprechende Rollen sind.

13. Höheneinstellbare Plattform nach einem der vorhergehenden Ansprüche, wobei jedes von dem ersten und dem zweiten Paar von Beinen durch Querstangen (301, 401), die Laufrollen (151, 152, 153, 154) der jeweiligen Paare von Beinen (131, 132, 133, 134) fest miteinander verbinden, parallel zueinander gehalten wird.

14. Höheneinstellbare Plattform nach einem der vorhergehenden Ansprüche, wobei der obere Rahmen durch einen Tischaufsatz abgedeckt ist.

15. Höheneinstellbare Plattform nach einem der vorhergehenden Ansprüche, wobei der obere Rahmen zumindest eines der Folgenden umfasst: eine Seitenschiene; einen Stift; einen Korb.

## Revendications

1. Plate-forme réglable en hauteur (100) comprenant :
- un châssis supérieur (101) comprenant un système de glissière (110),
- des premier et deuxième éléments mobiles (111, 113) agencés pour être guidés dans le système de glissière (110), chaque élément mobile (111, 113) comprenant une monture de pied correspondant (121, 123),
- une première paire de pieds de plate-forme parallèles (131, 132), chaque pied étant doté d'un premier et d'un deuxième bouts (141a, 141b, 142a, 142b), les premiers bouts (141a, 142a) de la première paire de pieds (131, 132) étant fixés sur la monture de pied (121) du premier élément mobile (111), les deuxième bouts (141b, 142b) de la première paire de pieds (131, 132) étant fixés à des roulettes correspondantes (151, 152), par le biais de montures de roulettes (161, 162) correspondantes, et chaque pied de la première paire de pieds comprenant une paire de tiges mutuellement parallèles (171a, 171b, 172a, 172b) fixées de façon rotative à un bout de la monture de pied (121) du premier élément mobile (111), et étant fixé de façon rotative à l'autre bout sur la monture de la roulette correspondante (161, 162), la paire de tiges (171a, 171b, 172a, 172b) conjointement avec la monture de pied (121) du premier élément mobile (111), et la monture de la roulette correspondante (161, 162), formant une configuration en parallélogramme,
- une deuxième paire de pieds de plate-forme parallèles (133, 134), chaque pied étant doté d'un premier et d'un deuxième bouts (143a, 143b, 144a, 144b), les premiers bouts (143a, 144a) de la deuxième paire de pieds (143, 144) étant fixés sur la monture de pied (123) du deuxième élément mobile (113), les deuxième bouts (143b, 144b) de la deuxième paire de pieds (143, 144) étant fixés à des roulettes correspondantes (153, 154) par le biais de montures de roulettes (163, 164) correspondantes, et chacun de la deuxième paire de pieds (143, 144) comprenant une paire de tiges mutuellement parallèles (173a, 173b, 174a, 174b) fixées de façon rotative à un bout de la monture de pied (123) du deuxième élément mobile (113), et étant fixée de façon rotative à l'autre bout sur la monture de la roulette correspondante (163, 164), la paire de tiges et la monture de pied (123) du deuxième élément mobile (113), et la monture de la roulette correspondante (163, 164), formant une configuration en parallélogramme,
la première paire (131, 132) et la deuxième paire (133, 134) de pieds de plate-forme parallèles étant agencées pour se croiser,
une première tige (171a) de la première paire de pieds de plate-forme (131, 132) étant raccordée de façon rotative à une première tige (173a) de la deuxième paire de pieds de plate-forme à un premier point de raccordement (181),
une deuxième tige (172a) de la première paire de pieds de plate-forme (131, 132) étant raccordée de façon rotative à une deuxième tige (174a) de la deuxième paire de pieds de plate-forme à un deuxième point de raccordement (182),
la première paire de pieds (131, 132) et la deuxième paire de pieds (133, 134) pouvant tourner l'une par rapport à l'autre autour des premier et deuxième points de raccordement, en permettant ainsi, en combinaison avec les configurations en parallélogramme, de modifier la hauteur du châssis supérieur (101) relativement aux roulettes (151, 152, 153, 154).

2. Plate-forme réglable en hauteur selon la revendication 1, le système de glissière comprenant un jeu de glissières parallèles (110a, 110b, 110c, 110d), chacun des premiers et deuxième éléments mobiles (111, 113) comprenant respectivement une paire d'éléments mobiles (111a, 111b, 113a, 113b), chacun desquels étant agencé dans une glissière correspondante des glissières parallèles (110a, 110b, 110c, 110d).

3. Plate-forme réglable en hauteur selon la revendication 1 ou 2, une longueur de la première paire de pieds (131, 132) étant égale à une longueur de la deuxième paire de pieds (133, 134).

4. Plate-forme réglable en hauteur selon une des revendications 1-3, comprenant en outre un stabilisateur (125) avec un premier bout (155b), fixé par rotation au châssis supérieur (101), et un deuxième bout (155a), fixé par rotation à une des tiges (171a, 171b, 172a, 172b, 173a, 173b, 174a, 174b) de la première paire de pieds (131, 132) ou de la deuxième paire de pieds (133, 134).

5. Plate-forme réglable en hauteur selon la revendication 4, le premier bout (155b) du stabilisateur étant fixé à une distance égale de la première monture de pied (121) et de la deuxième monture de pied (123).

6. Plate-forme réglable en hauteur selon une quelconque des revendications précédentes, comprenant en outre un dispositif de maintien pour maintenir les première et deuxième paires de pieds fixes l'une par rapport à l'autre dans deux ou plusieurs configurations de hauteur.

7. Plate-forme réglable en hauteur selon une quelconque des revendications précédentes, comprenant en outre un actionneur configuré pour effectuer une rotation de la première paire de pieds (131, 132) relativement à la deuxième paire de pieds (133, 134) autour des points de raccordement (181, 182), l'ajustage d'une hauteur de la plate-forme s'effectuant en ajustant une longueur de l'actionneur.

8. Plate-forme réglable en hauteur selon la revendication 7, l'actionneur étant un actionneur linéaire.

9. Plate-forme réglable en hauteur selon la revendication 7, l'actionneur étant un cylindre hydraulique.

10. Plate-forme réglable en hauteur selon la revendication 7, l'actionneur étant un cylindre pneumatique.

11. Plate-forme réglable en hauteur selon une quelconque des revendications précédentes, le système de glissières comprenant des profilés en « C », et les éléments mobiles (111, 113) étant des coulisseaux agencés dans les profilés en « C ».

12. Plate-forme réglable en hauteur selon une quelconque des revendications précédentes, le système de glissières étant une voie ferrée, les éléments mobiles étant des rouleaux correspondants.

13. Plate-forme réglable en hauteur selon une quelconque des revendications précédentes, chacune de la première et de la deuxième paire de pieds étant maintenue dans une position parallèle à une des barres transversales (301, 401), en raccordant de façon rigide entre elles les roulettes (151, 152, 153, 154) des paires de pieds correspondantes (131, 132, 133, 134).

14. Plate-forme réglable en hauteur selon une quelconque des revendications précédentes, le châssis supérieur étant couvert par un plateau.

15. Plate-forme réglable en hauteur selon une quelconque des revendications précédentes, le châssis supérieur comprenant au moins un des suivants : une glissière latérale ; une cheville ; un panier.
